# EUROPÄISCHE PATENTSCHRIFT

(11) **EP 4 066 341 B1**
(45) Veröffentlichungstag und Bekanntmachung des Hinweises auf die Patenterteilung: **27.12.2023**
(21) Anmeldenummer: 20808370.9
(22) Anmeldetag: 17.11.2020
(51) Int. Cl.: H02J 3/32, H02J 3/38, H02J 3/48, H02J 3/50, H02J 3/34, H02J 3/36

(54) **WANDLERVORRICHTUNG UND BETRIEBSVERFAHREN**
CONVERTER APPARATUS AND OPERATING METHOD
APPAREIL CONVERTISSEUR ET PROCÉDÉ DE MISE EN OEUVRE

(30) Priorität: 28.11.2019 DE 102019132336
(43) Veröffentlichungstag der Anmeldung: 05.10.2022
(73) Patentinhaber: SMA Solar Technology AG, 34266 Niestetal (DE)
(72) Erfinder: FALK, Andreas, 34131 Kassel (DE)
(86) Internationale Anmeldenummer: PCT/EP2020/082419
(87) Internationale Veröffentlichungsnummer: WO 2021/104944

(56) Entgegenhaltungen:
- EP-A1- 2 190 095
- EP-A1- 3 346 568
- DE-A1-102014 212 832
- US-A1- 2016 254 665

## Beschreibung

Die Erfindung betrifft eine Wandlervorrichtung zum Austausch von Leistung zwischen zwei Netzen, sowie ein Verfahren zum Leistungsaustausch.

Es ist bekannt, mittels Frequenzumrichtern Leistung zwischen Netzen auszutauschen, die mit unterschiedlicher Frequenz oder asynchron zueinander betrieben werden. Hierzu wird die zu übertragene Leistung von einem ersten Wechselrichter - oder Gleichrichter - in eine Gleichspannung umgewandelt und in einen Zwischenkreis eingespeist. Ein zweiter Wechselrichter entnimmt die zu übertragene Leistung aus dem Zwischenkreis und wandelt diese in eine für die Einspeisung in das Zielnetz kompatible Wechselspannungsleistung um. Um stabile Betriebsbedingungen sicherzustellen, muss die in den Zwischenkreis eingespeiste Leistung jederzeit der entnommenen Leistung entsprechen. Daher werden die beteiligten Wechselrichter häufig koordiniert zueinander, zum Beispiel über eine gemeinsame Steuereinrichtung, betrieben.

Es ist ebenfalls bekannt, einen Speicher, beispielsweise eine Batterie, über einen Wandler an den Zwischenkreis anzuschließen. In diesem Fall müssen ebenfalls eingespeiste und entnommene Leistung des Zwischenkreises übereinstimmen, wobei eine Differenz zwischen der durch den einen Wechselrichter eingespeisten und der durch den anderen Wechselrichter entnommenen Leistung durch den Wandler ausgeglichen und zur Ladung/Entladung des Speichers verwendet wird.

Ebenfalls bekannt ist die Erzeugung von Gleichspannungsleistung durch Solargeneratoren und die Einspeisung dieser Leistung durch einen Wechselrichter in ein angeschlossenes Wechselspannungsnetz. Der Wechselrichter ist hierbei in der Lage, die von den Solargeneratoren erzeugt Leistung durch Variation der Gleichspannung an den Solargeneratoren zu maximieren.

Die Schrift EP 2 190 095 A1 offenbart ein Energieversorgungssystem, das über zwei Wechselrichter an zwei unterschiedliche Netze, beispielsweise ein Bahnnetz und ein Wechselstromnetz, angeschlossen ist. Die Wechselrichter sind über ein gemeinsames Gleichstrom-Zwischenkreisnetz verbunden, an den auch zusätzlich Energieerzeuger angeschlossen sind. Ob und wie ein Ertrag aus den angeschlossenen Energieerzeugern optimiert werden soll, ist nicht offenbart.

Es ist Aufgabe dieser Erfindung, eine Vorrichtung zur Übertragung von Leistung zwischen zwei grundsätzlich eigenständig betriebenen Wechselspannungsnetzen um einen Solargenerator zu erweitern, und die Vorrichtung dazu zu ertüchtigen, die Leistungserzeugung des Solargenerators zu kontrollieren und die erzeugte Leistung wahlweise oder auch anteilig den beiden Netzen zuzuführen. Es ist weiterhin Aufgabe dieser Erfindung, ein Betriebsverfahren für eine solche Vorrichtung aufzuzeigen.

Diese Aufgabe wird gelöst durch eine Vorrichtung mit den Merkmalen des Anspruchs 1, sowie durch ein Verfahren mit den Merkmalen des Anspruchs 7. Bevorzugte Ausführungsformen sind in den abhängigen Ansprüchen beschrieben.

In einem ersten Aspekt der Erfindung umfasst eine Wandlervorrichtung zum Austausch von Leistung zwischen einem ersten AC-Netz und einem zweiten AC-Netz einen ersten bidirektionalen Wechselrichter, der AC-seitig mit dem ersten AC-Netz verbindbar und DC-seitig mit einem Zwischenkreis verbunden ist, einen zweiten bidirektionalen Wechselrichter, der AC-seitig mit dem zweiten AC-Netz verbindbar und DC-seitig mit dem Zwischenkreis verbunden ist. Der Zwischenkreis ermöglicht somit die Übertragung von Leistung zwischen den Wechselrichtern und damit zwischen den AC-Netzen. Ein Solargenerator ist direkt, also ohne Zwischenschaltung eines Wandlers, mit dem Zwischenkreis verbunden. Eine erste Steuerung des ersten Wechselrichters ist dazu eingerichtet, eine vorgegebene Wandlerleistung des ersten Wechselrichters einzustellen und eine zweite Steuerung des zweiten Wechselrichters ist dazu eingerichtet, eine Spannung des Zwischenkreises derart einzustellen, dass eine Leistung des Solargenerators wie gewünscht eingestellt wird. Dabei kann die eingestellte Leistung eine maximale Leistung (MPP-Leistung MPP = Maximal Power Point) sein.

Auf diese Weise wird eine für den Austausch von Leistung zwischen Netzen konzipierte Wandlervorrichtung ohne oder mit minimalen zusätzlichen Komponenten ertüchtigt, die durch einen Solargenerator erzeugbare Leistung flexibel einem oder beiden Netzen zur Verfügung zu stellen. Der Solargenerator kann hierbei mit einer Nennleistung dimensioniert sein, die zwischen 10% und 100% der Nennleistung eines der Wechselrichter der Wandlervorrichtung liegt. Es ist aber auch denkbar, den Solargenerator mit einer Nennleistung über 100%, beispielsweise mit 150% oder im Extremfall bis zu 200% der Nennleistung eines der Wechselrichter der Wandlervorrichtung auszustatten, wodurch die Funktion des Leistungsaustauschs zwischen den Netzen dann aber situationsbedingt beeinträchtigt werden kann oder der Solargenerator abgeregelt werden muss. Es ist dann beispielsweise nicht mehr möglich, eine gewünschte Leistung aus einem Netz zu entnehmen, sondern PV-Leistung wird in beide Netze eingespeist beziehungsweise der Solargenerator wird abgeregelt, indem die Zwischenkreisspannung entsprechend angehoben wird.

Durch die direkte Anbindung des Solargenerators an den Zwischenkreis kann der zweite Wechselrichter die durch den Solargenerator erzeugte Leistung maximieren, indem er die Leistung des Solargenerators beispielsweise mittels Stromsensoren bestimmt und die Spannung dahingehend variiert, dass er sich einem Leistungsmaximum MPP (Maximum Power Point) des Solargenerators annähert. Alternativ zur Bestimmung der Solargeneratorleistung kann der zweite Wechselrichter auch lediglich eine Änderung der eigenen Wandlerleistung bestimmen, die sich aus einer selbst erzeugten Änderung der Zwischenkreisspannung ergibt, um sich dem MPP anzunähern. Auf diese Weise sind keine zusätzlichen Stromsensoren erforderlich. Der zweite Wechselrichter kann hierzu bekannte MPP-Trackingalgorithmen verwenden. Je nach Leistungssollwert, auf den der erste Wechselrichter regelt, können sich am zweiten Wechselrichter unterschiedliche Leistungsflüsse und Flussrichtungen ergeben. Der erste Leistungssollwert gestattet es demnach, die vom Solargenerator erzeugte Leistung auf die beiden Netze flexibel aufzuteilen. Parallel hierzu kann ein gewünschter Leistungsaustausch zwischen den beiden Netzen im Rahmen der Wandlerkapazität der beteiligten Wechselrichter erreicht werden.

Bevorzugt ist mindestens eines der Netze dreiphasig ausgeführt. Besonders bevorzugt sind beide Netze dreiphasig ausgeführt. Es ist aber auch denkbar, dass eines der Netze oder gar beide Netze einphasig ausgeführt ist oder sind.

In einer vorteilhaften Ausführungsform ist weiterhin ein Speicher über einen Wandler an den Zwischenkreis angeschlossen. Hierdurch erhält die erfindungsgemäße Wandlervorrichtung weitere Flexibilität hinsichtlich der Leistungsflüsse in beide Netze oder aus den beiden Netzen. Leistung, die der Solargenerator erzeugt, die aber zum Erzeugungszeitpunkt in keines der Netze eingespeist werden soll, oder Leistung, die aus den Netzen entnommen werden soll, kann vorübergehend in den Speicher transferiert werden, um eine spätere Einspeisung zu gestatten. Es ist vorübergehend ebenfalls möglich, die Summe der in die beiden Netze eingespeisten Leistung durch Entladen des Speichers über den vom Solargenerator erzeugten Leistungswert hinaus zu erhöhen.

Zur Flexibilisierung der Gestaltung der Leistungsflüsse sind der erste Wechselrichter und der zweite Wechselrichter bidirektional ausgeführt.

In einer Ausgestaltung kann ein Leistungssollwert des leistungsregelnd betriebenen Wechselrichters als Funktion der über den spannungsregelnd betriebenen Wechselrichter fließenden Leistung bestimmt werden. Beispielsweise kann der Leistungssollwert als Prozentsatz der über den spannungsregelnd betriebenen Wechselrichter fließenden Leistung bestimmt werden, zum Beispiel um eine feste prozentual Aufteilung der vom Solargenerator erzeugten Leistung zwischen den Netzen zu gewährleisten. Es kann aber auch nur eine Anpassung des Leistungssollwerts vorgenommen werden, wenn der spannungsregelnd betriebenen Wechselrichter droht, überlastet zu werden.

Ein weiterer Aspekt der Erfindung betrifft ein Verfahren zum Austausch von Leistung zwischen einem ersten AC-Netz und einem zweiten AC-Netz über eine Wandlervorrichtung, die einen ersten, mit dem ersten AC-Netz verbundenen bidirektionalen Wechselrichter und einen zweiten, mit dem zweiten AC-Netz verbundenen bidirektionalen Wechselrichter umfasst, die miteinander über einen Zwischenkreis verbunden sind, wobei ein Solargenerator direkt an den Zwischenkreis angeschlossenen ist. Das erfindungsgemäße Verfahren umfasst einen leistungsregelnden Betrieb des ersten Wechselrichters und einen zwischenkreisspannungsregelnden Betrieb des zweiten Wechselrichters. Hierbei wird die Zwischenkreisspannung derart geregelt, dass eine Leistung des Solargenerators maximiert wird. Die Maximierung der Solargeneratorleistung kann hierbei auch nur temporär, zum Beispiel in einem von mehreren Betriebsmodi, erfolgen. Hierbei wird der zweite Wechselrichter den Solargenerator zur Vermeidung einer Überlastung abgeregelt betrieben, wenn eine maximale Wandlerleistung des zweiten Wechselrichters erreicht wird.

In einer vorteilhaften Gestaltung der Erfindung stellt zumindest einer der Wechselrichter, bevorzugt stellen beide Wechselrichter Blindleistung bereit, wobei die Blindleistung bevorzugt als Funktion der Spannung des an den mindestens einen Wechselrichter beziehungsweise des an dem jeweiligen Wechselrichters angeschlossenen Netzes bereitgestellt wird. Durch diese Maßnahme kann die Spannung des an den zumindest einen Wechselrichter angeschlossenen Netzes beziehungsweise beider Netze gestützt werden.

Entsprechend ist es auch vorteilhaft, dass der erste Wechselrichter den Leistungssollwert als Funktion der Frequenz des an den Wechselrichter angeschlossenen Netzes wählt, da die Netzfrequenz ein Indikator für einen Leistungsüberschuss oder ein Leistungsdefizit des Netzes darstellt, die der erste Wechselrichter auf diese Weise auszugleichen oder zumindest zu verringern vermag.

Es soll an dieser Stelle nicht unerwähnt bleiben, dass der Solargenerator in einer weiteren Betriebsart auch als Dump-Load verwendet werden kann, wenn kurzfristig ein oder beide Netze einen Überschuss an Energie aufweisen, der durch die Wechselrichter unmittelbar in den Solargenerator übertragen werden kann, insbesondere indem die Zwischenkreisspannung über eine Leerlaufspannung des Solargenerators angehoben wird.

In einer Ausführungsform der Erfindung kann, zum Beispiel innerhalb eines Betriebsmodus, die Rolle des leistungsregelnden Betriebs und des spannungsregelnden Betriebs zwischen den Wechselrichtern aufgrund von Wechselkriterien getauscht werden. Bevorzugt kann der Solargenerator vor dem Tausch der Rollen in einen Betriebspunkt mit einer Spannung oberhalb einer MPP-Spannung des Solargenerators versetzt werden. In diesem Betriebspunkt sinkt die Solargeneratorleistung bei steigender Spannung beziehungsweise steigt bei sinkender Spannung. Wenn jetzt in einer Übergangsphase, in der beide Wechselrichter mit einer festen Wandlerleistung betrieben werden, die der Wandlerleistung unmittelbar vor Beginn der Übergangsphase entspricht, erfordern Änderungen der Solargeneratorleistung durch Einstrahlungsänderungen keine Anpassung der Sollwerte der festen Wandlerleistung beider Wechselrichter, so dass sich ein stabiler Betrieb der Wandlervorrichtung innerhalb der Übergangsphase ergibt. Anfang und Ende der Übergangsphase können durch Kommunikation zwischen den Wechselrichtern beziehungsweise den zugehörigen Steuerungen koordiniert werden. Bevorzugt leitet der spannungsregelnd betriebene Wechselrichter den Rollentausch ein.

Im Folgenden wird die Erfindung mithilfe von Figuren dargestellt, von denen
- Fig. 1: eine erste erfindungsgemäße Ausführung einer Wandlervorrichtung und
- Fig. 2: eine zweite erfindungsgemäße Ausführung einer Wandlervorrichtung zeigen.

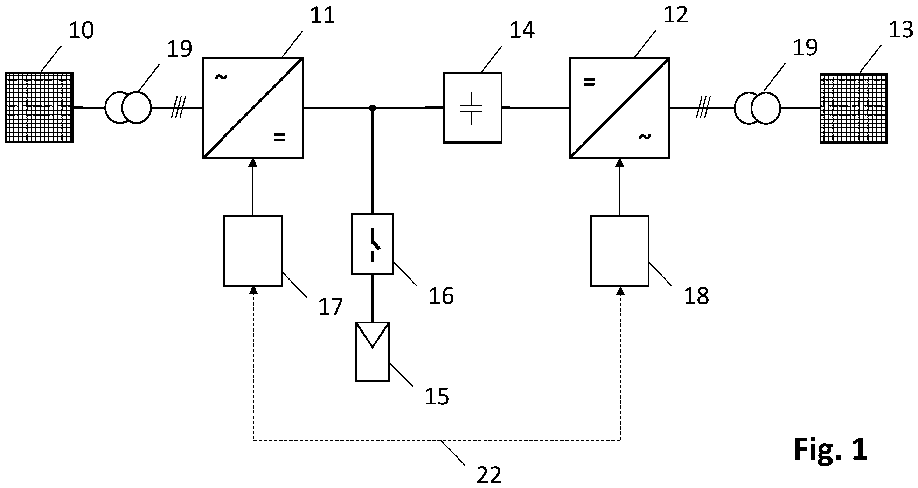

Fig. 1 zeigt eine erfindungsgemäße Ausführung einer Wandlervorrichtung 1 mit einem ersten Wechselrichter 11 und einem zweiten Wechselrichter 12. Der ersten Wechselrichter 11 ist AC-seitig über einen Transformator 19 an ein erstes Netz 10 angeschlossen, das hier einphasig ausgeführt ist. Der zweiten Wechselrichter 12 AC-seitig über einen weiteren Transformator 19 an ein zweites, hier dreiphasiges Netz 13 angeschlossen ist. Die Transformatoren 19 dienen zur Anpassung der Ausgangsspannung der beiden Wechselrichter an die Spannung des jeweils angeschlossenen Netzes. Beide Wechselrichter sind DC-seitig über einen Zwischenkreis 14 miteinander verbunden. Zusätzlich ist an den Zwischenkreis 14 ein Solargenerator 15 angeschlossen. Der Solargenerator 15 ist direkt, das heißt ohne Zwischenschaltung eines Wandlers, angeschlossen, so dass die Zwischenkreisspannung der Solargeneratorspannung entspricht und die Leistungserzeugung des Solargenerators 15 direkt über die Steuerung der Zwischenkreisspannung beeinflussbar ist. Der Solargenerator 15 kann bevorzugt über einen Trennschalter 16 vom Zwischenkreis 14 getrennt werden. Durch den Trennschalter 16 kann der Solargenerator 15 bei Bedarf vom Zwischenkreis 14 elektrisch getrennt werden.

Eine erste Steuerung 17 steuert den Betrieb des ersten Wechselrichters 11, während eine zweite Steuerung 18 den Betrieb des zweiten Wechselrichters 12 steuert. Es ist aber auch denkbar, dass beide Wechselrichter über eine gemeinsame Steuerung betrieben werden.

Die erste Steuerung 17 ist dazu eingerichtet, einen leistungsregelnden Betrieb des ersten Wechselrichters 11 zu realisieren, in dem der erste Wechselrichter 11 eine Sollleistung in das erste Netz 10 einspeist oder diese dem ersten Netz 10 entnimmt. Die Sollleistung kann abhängig von einer Frequenz des ersten Netzes 10 gewählt werden, indem beispielsweise in der ersten Steuerung 17 eine Leistungs-Frequenzkennlinie hinterlegt ist. Zusätzlich kann die erste Steuerung 17, beispielsweise aufgrund einer hinterlegten Blindleistungs-Spannungskennlinie, eine Blindleistung in Abhängigkeit der Spannung des ersten Netzes 10 bereitstellen. Beide Optionen dienen der Stabilisierung des ersten Netzes 10.

Die zweite Steuerung 18 ist dazu eingerichtet, einen zwischenkreisspannungsregelnden Betrieb des zweiten Wechselrichters 12 zu realisieren, in dem der zweite Wechselrichter 12 die mit dem zweiten Netz 13 ausgetauschte Leistung derart regelt, dass die am Zwischenkreis 14 anliegende Zwischenkreisspannung einen Sollwert annimmt. Im Rahmen dieser Regelung kann sich sowohl ein Leistungsfluss in das zweite Netz 13 als auch eine Leistungsentnahme aus dem zweiten Netz 13 ergeben. Die Höhe und Richtung des Leistungsflusses wird sowohl durch den am ersten Wechselrichter 11 aktuell verwendeten Sollleistungswert als auch durch die aktuell von dem Solargenerator 15 erzeugte Leistung beeinflusst.

Auch die zweite Steuerung 18 kann analog zur ersten Steuerung 17 eine Blindleistung bereitstellen, deren Höhe und Art insbesondere als Funktion der Spannung des zweiten Netzes 13 gewählt ist, wobei jeweils eine Scheinleistungsgrenze der beiden Wechselrichter zu beachten ist, um eine Überlastung der Wechselrichter zu vermeiden.

Die zweite Steuerung ist weiterhin dazu eingerichtet, zumindest in einer Betriebsart einen Sollwert für die Spannung des Zwischenkreises 14 derart zu wählen, dass die von dem Solargenerator 15 erzeugte Leistung maximiert wird. Zum Erreichen dieses Ziels sind bekannte MPP-Trackingalgorithmen geeignet, bei denen die Solargeneratorspannung beziehungsweise Zwischenkreisspannung in Schritten oder kontinuierlich verändert wird und eine sich durch die Spannungsänderung verursachte Leistungsveränderung zum Erreichen einer stabilen Zwischenkreisspannung analysiert wird, um weitere Spannungsänderungen hieraus abzuleiten und die Solargeneratorspannung so in Richtung zu einem Punkt maximaler Leistung zu treiben beziehungsweise diesen dort zu halten.

Bevorzugt sind die beiden Steuerungen dazu eingerichtet, Steuerparameter untereinander über eine Steuerleitung 22 auszutauschen. Diese Parameter können Sollwerte und/oder Istwerte der elektrischen Parameter der jeweiligen Wechselrichter umfassen, beispielsweise Leistungs-, Strom- oder Spannungswerte umfassen oder konkrete Steuerbefehle enthalten. Auf diese Weise kann eine der Steuerungen Einfluss auf die andere Steuerung ausüben oder beide Steuerungen können gemeinsame Regelungsziele verfolgen. Der Austausch der Steuerparameter kann aber auch kabellos, insbesondere durch Funkübertragung erfolgen.

Es ist möglich, dass die Rolle der leistungsregelnden Steuerung und der spannungsregelnden Steuerung der ersten Steuerung 17 beziehungsweise zweiten Steuerung 18 nicht dauerhaft zugeordnet ist, sondern zwischen beiden Steuerungen gewechselt wird. Der Wechsel kann aufgrund der Betriebssituation der Wandlervorrichtung 1 gewählt werden, wobei Wechselkriterien für den Rollenwechsel vorgegeben werden. Bei Erfüllen der Wechselkriterien wird der Rollenwechsel beispielsweise über eine Kommunikation zwischen den beiden Steuerungen durchgeführt, dargestellt durch eine gestrichelte Linie. Ein solcher Rollenwechsel kann eine kurze Übergangsphase aufweisen, in der beide Steuerungen leistungsregelnd betrieben werden. Zu Beginn der Übergangsphase wird die aktuelle Wandlerleistung des spannungsregelnd betriebenen Wechselrichters als initiale Sollleistung für den leistungsregelnden Betrieb gewählt. Zum Ende der Übergangsphase wird der ursprünglich leistungsregelnde Wechselrichter in den spannungsregelnden Betrieb versetzt.

Vor einer Übergangsphase kann der Solargenerator15 bevorzugt in einen Betriebspunkt mit einer Solargeneratorspannung oberhalb einer aktuellen MPP-Spannung versetzt werden. Hierdurch wirkt die Leistungs-Spannungs-Kennlinie des Solargenerators15 in der Übergangsphase einer Spannungsänderung aufgrund eines möglichen unvollständigen Leistungsausgleichs im Zwischenkreis entgegen. Es ist denkbar, dass beim Rollenwechsel die aktuelle MPP-Spannung des Solargenerators15 im Rahmen der Kommunikation zum Rollenwechsel mit ausgetauscht wird. Dies erlaubt eine unmittelbare Rückkehr des Solargenerators zu seinem MPP nach Abschluss des Rollenwechsels.

Die Zuordnung der Rollen als leistungs- beziehungsweise spannungsregelnd betriebener Wechselrichter beziehungsweise die Wechselkriterien können bevorzugt so gewählt werden, dass eine möglichst große Regelreserve gegenüber Schwankungen der vom Solargenerator 15 erzeugten Leistung und/oder eine möglichst große Regelreserve in Bezug auf netzstabilisierende Reaktion der Wechselrichter erreicht wird. Beispielsweise kann die Rolle des spannungsregelnd betriebenen Wechselrichters bevorzugt dem Wechselrichter mit der größeren Nennleistung zugewiesen werden.

Sowohl das erste Netz 10 als auch das zweite Netz 13 kann einphasig oder mehrphasig, insbesondere dreiphasig, ausgeführt sein. Die Anzahl der Phasen kann zwischen beiden Netzen gleich oder unterschiedlich ausgeführt sein. Beispielsweise kann das am ersten Wechselrichter 11 angeschlossene Netz 10 dreiphasig, und das an den zweiten Wechselrichter 12 angeschlossene Netz 13 einphasig ausgeführt sein.

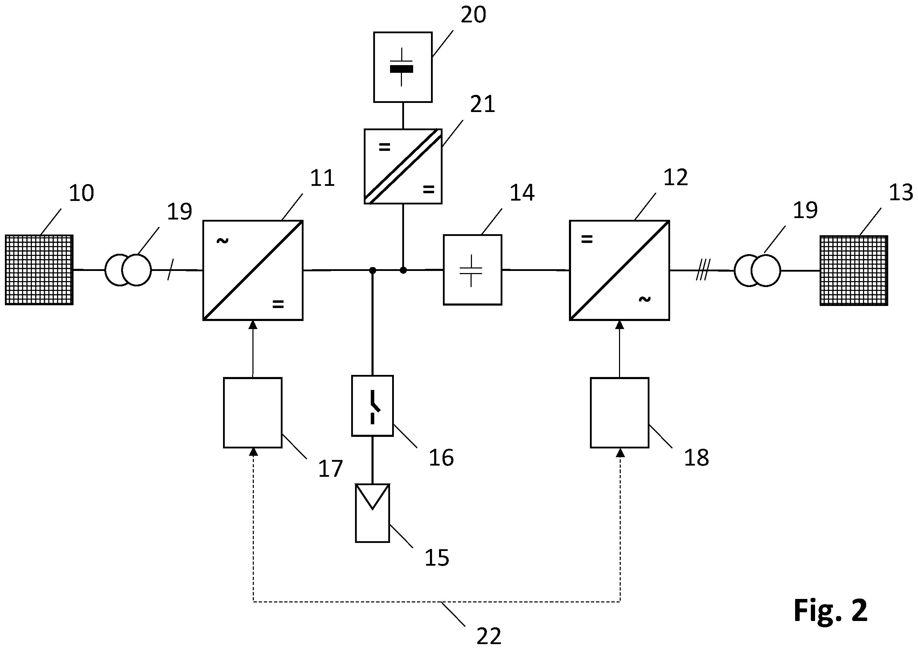

Eine zweite Ausführungsform der erfindungsgemäßen Wandlervorrichtung 1 ist in Fig. 2 dargestellt. Gegenüber der Ausführungsform aus Fig. 1 ist die Wandlervorrichtung 1 durch einen Speicher 20 ergänzt, der über einen Wandler 21 ebenfalls an den Zwischenkreis angeschlossen ist. Der Wandler 21 ist bevorzugt als galvanisch trennender Wandler ausgeführt, um den Speicher 20 aus Gründen der Betriebssicherheit isoliert vom Zwischenkreis 14 zu betreiben. Weiterhin sind in Fig. 2 beide Netze 10, 13 dreiphasig ausgeführt.

Der Wandler 21 wird bevorzugt derart gesteuert, dass zwischen Zwischenkreis 14 und Speicher 20 eine gewünschte, zumindest für einen Zeitraum konstante Austauschleistung ausgetauscht wird. Auf diese Weise hat der Anschluss des Speichers 20 an den Zwischenkreis 14 keinen oder keinen maßgeblichen Einfluss auf das Auffinden eines Betriebspunktes maximaler Leistung durch den spannungsregelnden Wechselrichter. Es ist aber auch denkbar, dass der Wandler 21 temporär spannungsgeregelt betrieben wird, insbesondere während einer Betriebsart, in der beide Wechselrichter leistungsregelnd betrieben werden, beispielsweise im Rahmen der oben beschriebenen Übergangsphase. In einer solchen Betriebsart oder Phase kann der Wandler 21 so die Zwischenkreisspannung stabil halten, so dass beispielsweise der Solargenerator im MPP oder seinem sonstigen Betriebspunkt verbleibt.

Die für die erste Ausführungsform der erfindungsgemäßen Wandlervorrichtung 1 beschriebenen Betriebsverfahren, insbesondere hinsichtlich MPP-Tracking, Rollenwechsel und Blind- beziehungsweise Wirkleistungsbereitstellung zur Netzstützung, können in der zweiten Ausführungsform der erfindungsgemäßen Wandlervorrichtung 1 ebenso Verwendung finden. Der Speicher 20 erhöht hierbei die Möglichkeiten zur Netzstützung, indem er zusätzliche Regelreserven für einen erforderlichen kurzfristigen Leistungsbedarf bereitstellt.

### Bezugszeichenliste

- 1: Wandlervorrichtung
- 10: Netz
- 11: Wechselrichter
- 12: Wechselrichter
- 13: Netz
- 14: Zwischenkreis
- 15: Solargenerator
- 16: Trennschalter
- 17: Steuerung
- 18: Steuerung
- 19: Transformator
- 20: Speicher
- 21: Wandler
- 22: Steuerleitung

## Patentansprüche

1. Wandlervorrichtung (1) zum Austausch von Leistung zwischen einem ersten AC-Netz (10) und einem zweiten AC-Netz (13), umfassend:
- einen ersten bidirektionalen Wechselrichter (11), der AC-seitig mit dem ersten Netz (10) verbindbar und DC-seitig mit einem Zwischenkreis (14) der Wandlervorrichtung (1) verbunden ist,
- einen zweiten bidirektionalen Wechselrichter (12), der AC-seitig mit dem zweiten Netz (13) verbindbar und DC-seitig mit dem Zwischenkreis (14) verbunden ist,
- einen Solargenerator (15), der direkt mit dem Zwischenkreis (14) verbunden ist,
**dadurch gekennzeichnet dass**, eine erste Steuerung (17) des ersten Wechselrichters (11) dazu eingerichtet ist, eine vorgegebene Wandlerleistung des ersten Wechselrichters (11) einzustellen und eine zweite Steuerung (18) des zweiten Wechselrichters (13) dazu eingerichtet ist, eine Spannung des Zwischenkreises (14) derart einzustellen, dass eine Leistung des Solargenerators (15) maximiert wird.

2. Wandlervorrichtung (1) nach Anspruch 1, wobei mindestens eines der Netze dreiphasig ausgeführt ist.

3. Wandlervorrichtung (1) nach Anspruch 1 oder 2, wobei das erste Netz (10) einphasig ausgeführt ist.

4. Wandlervorrichtung (1) nach einem der vorangehenden Ansprüche, wobei die erste Steuerung (17) und die zweite Steuerung (18) dazu eingerichtet sind, untereinander Steuerungsparameter auszutauschen.

5. Wandlervorrichtung (1) nach einem der vorangehenden Ansprüche, wobei weiterhin ein Speicher (20) über einen Wandler (21) an den Zwischenkreis (14) angeschlossen ist.

6. Wandlervorrichtung (1) nach einem der vorangehenden Ansprüche, wobei der Solargenerator (15) eine Nennleistung aufweist, die zwischen 10% und 200% der Nennleistung eines der Wechselrichter (11, 21) der Wandlervorrichtung (1) liegt.

7. Verfahren zum Austausch von Leistung zwischen einem ersten AC-Netz (10) und einem zweiten AC-Netz (13) über eine Wandlervorrichtung (1), die einen ersten, mit dem ersten Netz (10) verbundenen bidirektionalen Wechselrichter (11) und einen zweiten, mit dem zweiten Netz (13) verbundenen bidirektionalen Wechselrichter (12) umfasst, die miteinander über einen Zwischenkreis (14) verbunden sind, wobei ein Solargenerator (15) direkt an den Zwischenkreis (14) angeschlossenen ist, **dadurch gekennzeichnet dass**, das Verfahren einen leistungsregelnden Betrieb des ersten Wechselrichters (11) und einen zwischenkreisspannungsregelnden Betrieb des zweiten Wechselrichters (12) umfasst, und die Zwischenkreisspannung derart geregelt wird, dass eine Leistung des Solargenerators (15) maximiert wird.

8. Verfahren nach Anspruch 7 wobei der zweite Wechselrichter (12) den Solargenerator (15) abgeregelt betreibt, wenn eine maximale Wandlerleistung des zweiten Wechselrichters (13) erreicht wird.

9. Verfahren nach Anspruch 7 oder 8, wobei zumindest einer der Wechselrichter (11, 12) Blindleistung bereitstellt, wobei die Blindleistung bevorzugt als Funktion der Spannung des an den mindestens einen Wechselrichter angeschlossenen AC-Netzes bereitgestellt wird.

10. Verfahren nach einem der Ansprüche 7 bis 9, wobei der erste Wechselrichter (11) die Leistung als Funktion der Frequenz des an den Wechselrichter (11) angeschlossenen AC-Netzes (10) wählt.

11. Verfahren nach einem der Ansprüche 7 bis 10, wobei eine Rolle des leistungsregelnden Betriebs und des spannungsregelnden Betriebs zwischen den Wechselrichtern aufgrund von Wechselkriterien getauscht wird.

12. Verfahren nach Anspruch 11, wobei vor dem Tausch der Rollen der Solargenerator (15) in einen Betriebspunkt mit einer Spannung oberhalb einer MPP-Spannung des Solargenerators (15) versetzt wird.

13. Verfahren nach einem der Ansprüche 7 bis 12, wobei ein Leistungssollwert des leistungsregelnd betriebenen Wechselrichters als Funktion der über den spannungsregelnd betriebenen Wechselrichter fließenden Leistung vorgegeben wird.

## Claims

1. A converter device (1) for exchanging power between a first grid (10) and a second AC grid (13), comprising:
- a first bidirectional inverter (11) that can be connected on the AC side to the first grid (10) and is connected on the DC side to a link circuit (14) of the converter device (1),
- a second bidirectional inverter (12) that can be connected on the AC side to the second grid (13) and is connected on the DC side to the link circuit (14),
- a solar generator (15) connected directly to the link circuit (14),
**characterized in that** a first controller (17) of the first inverter (11) is configured to set a specified converter power of the first inverter (11) and a second controller (18) of the second inverter (13) is configured to set a voltage of the link circuit (14) such that a power of the solar generator (15) is maximized.

2. The converter device (1) as claimed in claim 1, wherein at least one of the grids has a three-phase design.

3. The converter device (1) as claimed in claim 1 or 2, wherein the first grid (10) has a single-phase design.

4. The converter device (1) as claimed in one of the preceding claims, wherein the first controller (17) and the second controller (18) are configured to exchange control parameters with one another.

5. The converter device (1) as claimed in one of the preceding claims, wherein a storage device (20) is also connected to the link circuit (14) via a converter (21).

6. The converter device (1) as claimed in one of the preceding claims, wherein the solar generator (15) has a rated power which is between 10% and 200% of the rated power of one of the inverters (11, 21) of the converter device (1).

7. A method for exchanging power between a first AC grid (10) and a second AC grid (13) via a converter device (1) comprising a first bidirectional inverter (11) connected to the first grid (10) and a second bidirectional inverter (12) connected to the second grid (13), both being connected to each other via a link circuit (14), wherein a solar generator (15) is connected directly to the link circuit (14),
**characterized in that** the method comprises a power-regulating operation of the first inverter (11) and a link-circuit-voltage-regulating operation of the second inverter (12), and the link circuit voltage is regulated in such a way that the power of the solar generator (15) is maximized.

8. The method as claimed in claim 7, wherein the second inverter (12) operates the solar generator (15) in a curtailed manner when a maximum converter power of the second inverter (13) is reached.

9. The method as claimed in claim 7 or 8, wherein at least one of the inverters (11, 12) provides reactive power, with the reactive power preferably being provided as a function of the voltage of the AC grid connected to the at least one inverter.

10. The method as claimed in one of claims 7 to 9, wherein the first inverter (11) selects the power as a function of the frequency of the AC grid (10) connected to the inverter (11).

11. The method as claimed in one of claims 7 to 10, wherein a role of the power-regulating operation and the voltage-regulating operation is swapped between the inverters based on swap criteria.

12. The method as claimed in claim 11, wherein, before the roles are swapped, the solar generator (15) is set to an operating point with a voltage above an MPP voltage of the solar generator (15).

13. The method as claimed in one of claims 7 to 12, wherein a target power value of the inverter operated in a power-regulating manner is specified as a function of the power flowing via the inverter operated in a voltage-regulating manner.

## Revendications

1. Dispositif transducteur (1) pour l'échange de puissance entre un premier réseau AC (10) et un deuxième réseau AC (13), comprenant :
- un premier onduleur bidirectionnel (11), cet onduleur pouvant être relié côté AC au premier réseau (10) et étant relié côté DC à un circuit intermédiaire (14) du dispositif transducteur (1),
- un deuxième onduleur bidirectionnel (12), cet onduleur pouvant être relié côté AC avec le deuxième réseau (13) et étant relié côté DC avec le circuit intermédiaire (14),
- un générateur solaire (15) directement relié au circuit intermédiaire (14),
**caractérisé en ce qu'**une première commande (17) du premier onduleur (11) est configurée pour régler une puissance de transducteur prédéterminée du premier onduleur (11) et une deuxième commande (18) du deuxième onduleur (13) est configurée pour régler une tension du circuit intermédiaire (14) de manière qu'une puissance du générateur solaire (15) soit maximisée.

2. Dispositif transducteur (1) selon la revendication 1, dans lequel au moins l'un des réseaux est réalisé en triphasé.

3. Dispositif transducteur (1) selon l'une des revendications 1 ou 2, dans lequel le premier circuit (10) est réalisé en monophasé.

4. Dispositif transducteur (1) selon l'une des revendications qui précèdent, dans lequel la première commande (17) et la seconde commande (18) sont configurées pour échanger entre elles des paramètres de commande.

5. Dispositif transducteur (1) selon l'une des revendications qui précèdent, dans lequel un système de stockage à batterie (20) est raccordé au circuit intermédiaire (14) par l'intermédiaire d'un transducteur (21).

6. Dispositif transducteur (1) selon l'une des revendications qui précèdent, dans lequel le générateur solaire (15) présente une puissance nominale comprise entre 10 % et 200 % de la puissance nominale de l'un des onduleurs (11, 21) du dispositif transducteur (1).

7. Procédé conçu pour l'échange de puissance entre un premier réseau AC (10) et un deuxième circuit AC (13) par l'intermédiaire d'un dispositif transducteur (1), qui comprend un premier onduleur bidirectionnel (11) relié au premier réseau (10) et un deuxième onduleur bidirectionnel (12) relié au deuxième réseau (13), les deux onduleurs étant reliés entre eux par l'intermédiaire d'un circuit intermédiaire (14) et un générateur solaire (15) étant directement relié au circuit intermédiaire (14), **caractérisé en ce que** le procédé comprend un mode de fonctionnement régulateur de la puissance du premier onduleur (11) et un mode de fonctionnement régulateur de la tension du circuit intermédiaire du deuxième onduleur (12), et **en ce que** la tension du circuit intermédiaire est régulée de manière à maximiser une puissance du générateur solaire (15).

8. Procédé selon la revendication 7, dans lequel le deuxième onduleur (12) bride le fonctionnement du générateur solaire (15) lorsqu'une puissance de transduction maximale du deuxième onduleur (13) est atteinte.

9. Procédé selon l'une des revendications 7 ou 8, dans lequel au moins l'un des onduleurs (11, 12) fournit une puissance réactive, cette puissance réactive étant de préférence fournie en fonction de la tension du réseau AC relié à au moins un des onduleurs.

10. Procédé selon l'une des revendications 7 à 9, dans lequel le premier onduleur (11) sélectionne la puissance en fonction de la fréquence du réseau AC (10) relié à l'onduleur (11).

11. Procédé selon l'une des revendications 7 à 10, dans lequel un rôle du mode de fonctionnement régulateur de puissance et du mode de fonctionnement régulateur de tension est échangé entre les onduleurs sur la base de critères d'alternance.

12. Procédé selon la revendication 11, dans lequel, avant l'échange des rôles, le générateur solaire (15) est amené à un point de fonctionnement avec une tension supérieure à une tension MPP du générateur solaire (15).

13. Procédé selon l'une des revendications 7 à 12, dans lequel une valeur de consigne de la puissance de l'onduleur à mode de fonctionnement régulateur de puissance est définie en fonction de la puissance circulant par l'onduleur à mode de fonctionnement régulateur de tension.
